# EUROPEAN PATENT SPECIFICATION

(11) **EP 2 644 301 B1**
(45) Date of publication and mention of the grant of the patent: **30.04.2014**
(21) Application number: 13161452.1
(22) Date of filing: 27.03.2013
(51) Int. Cl.: B23B 29/034, B23B 29/02, B23B 3/26, B23B 5/16

(54) **Portable machine tool.**
Tragbare Werkzeugmaschine.
Machine-outil portable.

(30) Priority: 28.03.2012 IT BO20120167
(43) Date of publication of application: 02.10.2013
(73) Proprietor: SIR MECCANICA S.p.A., 88100 Catanzaro (IT)
(72) Inventor: Siracusa, Rinaldo, 88100 Catanzaro (IT)
(74) Representative: Firmati, Leonardo

(56) References cited:
- US-A- 3 880 544
- US-A- 4 824 296

## Description

This invention relates to a portable machine tool according to the preamble of claim 1. Such tool is known from US 3 880 544 A.

The use of portable machine tools is known, especially for stock removal applications where the workpiece to be machined cannot be removed to the workshop and must be machined on site, for example in the case of parts which are difficult to dismantle and which form part of large construction site machines or fixed installations.

It may also be necessary to machine mechanical parts which are difficult to access with a traditional machine tool.

For these reasons, owing to the considerable size of the workpieces to be machined or the difficulty of reaching certain parts of the workpiece, prior art machines of the type described above require numerous, time-consuming manual adjustments (setup) to prepare for work.

Moreover, the parts to be machined are often worn and are therefore irregular and misshapen, making setup operations even more awkward.

The aim of this invention is to provide a portable machine tool which overcomes the above mentioned disadvantages of the prior art.

The technical purpose and aim specified are substantially achieved by a portable machine tool comprising the technical features set out in the independent claim 1.

The secondary claims set out other advantageous aspects of the portable machine tool according to this invention.

These and other innovative features of the invention, as well as its advantages, will become more apparent from the following detailed description of a preferred, non-limiting embodiment of it, with reference to the accompanying drawings, in which:
- Figure 1 is a perspective view of a portable machine tool according to the invention;
- Figure 2 is a perspective view of a first detail from Figure 1;
- Figure 3 is an enlarged perspective view, with some parts cut away in order to better illustrate others, of a detail from Figure 2;
- Figure 4 shows a second embodiment of the detail of Figure 3;
- Figure 5 is a perspective exploded view of a second detail from Figure 1.

With reference to the accompanying drawings, the numeral 1 denotes in its entirety a portable machine tool according to this invention.

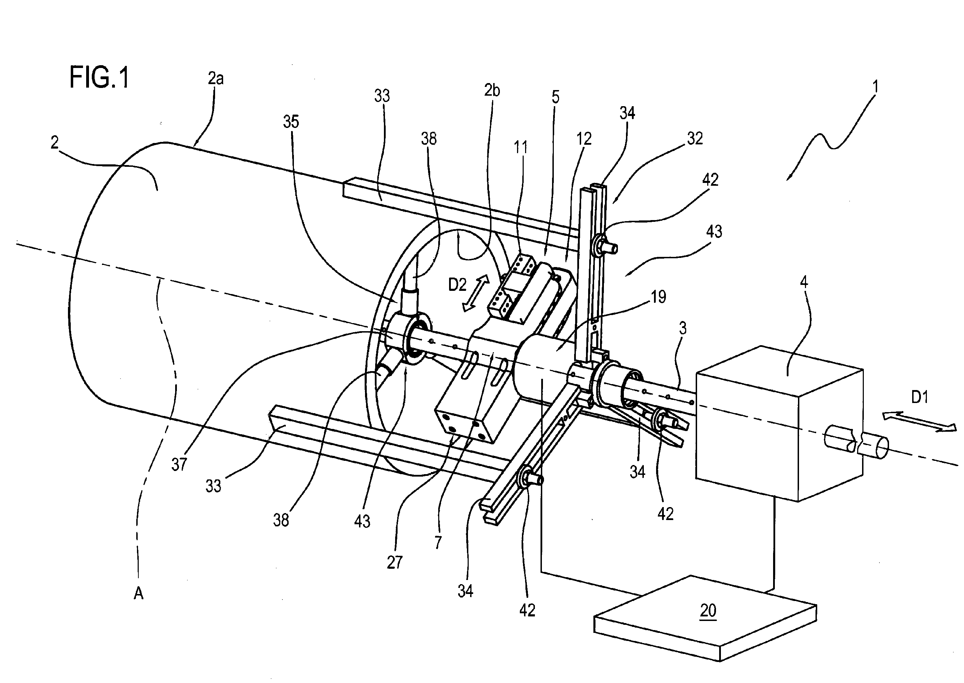

The portable machine tool 1 is designed to perform stock removal operations, such as boring, milling, etc., on large workpieces. Figure 1, for example, shows the machine tool 1 working on a pipe, labelled 2.

As shown in the drawing, the machine 1 comprises a shaft 3 which rotates about its central axis A, and first motor means, schematically represented as a block 4, for rotationally driving the shaft 3.

The first motor means 4, preferably electrical, are of known type and will not be described in more detail.

The machine tool 1 also comprises a tool holder head 5 which is carried by the rotary shaft 3 and which rotates as one with the shaft 3 about the axis of rotation A.

The axis of rotation A defines a first feed direction D1 of the shaft 3 and head 5. The first motor means 4 also feed the head 5 and the shaft 3 along the direction D1.

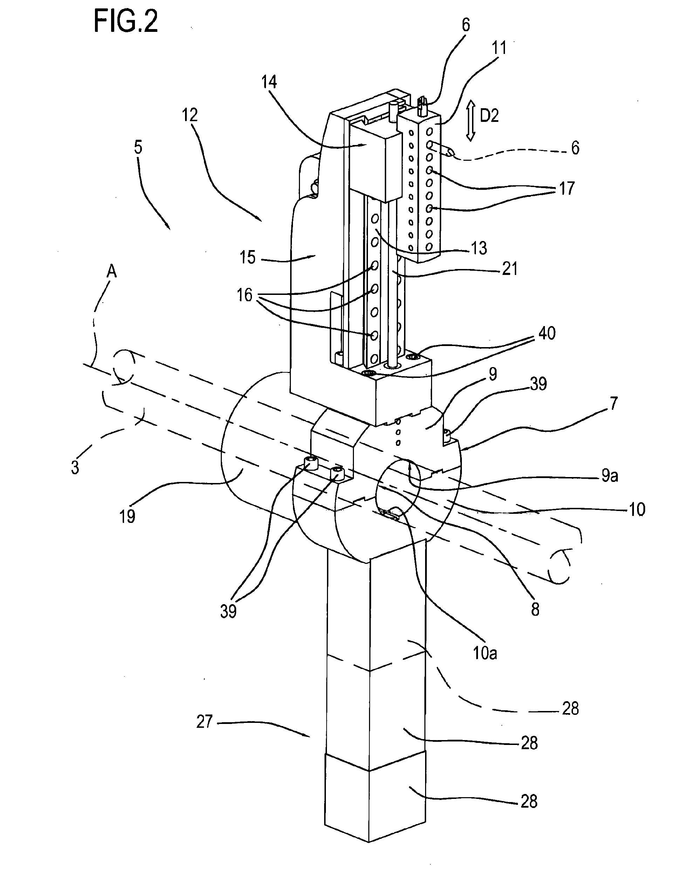

As shown in Figure 2, the head 5 comprises a tool holder 11 which is movable along a second direction D2 that is orthogonal to the direction D1.

The head 5 further comprises a guide 13 which extends mainly along the direction D2. Slidingly coupled to the guide 13 there is a slide 14 and the tool holder 11 is mounted on the slide 14. Preferably, the guide 13 is of the "dovetail" type.

The head 5 is fitted to the shaft 3 by a supporting member 7. The member 7 has a central hole 8 through which the member 7 itself is fitted solidly to the shaft 3 in such a way that, in working conditions, the head 5 is driven in rotation by the shaft 3 about the axis of rotation A.

Fitting is effected by interference or by means of a key, not shown in the drawing.

The supporting member 7 comprises a first element 9 and a second element 10, each having a respective cavity 9a,10a defining the aforementioned hole 8 when the elements 9 and 10 are coupled to each other. As shown in Figure 2, the first element 9 and the second element 10 are coupled to each other by a plurality of screws, labelled 39 in the drawing.

In the embodiment illustrated, the head 5 comprises a member 15 mounted solidly to the supporting member 7 which the guide 13 is fixed to. More specifically, as shown in Figure 2, the member 15 is connected to the first element 9 of the supporting member 7 by a plurality of screws 40.

The guide 13 has a plurality of caps 16 for covering respective holes, not shown, which house respective screws, also not shown, by which the guide 13 itself is fixed to the member 15.

The caps 16 are made preferably of bronze and, owing to their self-lubricating property, can reduce friction during movement of the slide.

The tool holder 11 comprises a plurality of seats 17 for housing a tool 6 which is held i position by a suitable fixing means, not shown, such as, for example, a grub or other type of screw.

The machine 1 further comprises an electric motor 18 for moving the tool holder 11 along the direction D2. The electric motor 18 is mounted on the head 5 and is separate from the above mentioned first motor means 4. More specifically, the electric motor 18 constitutes second motor means for moving the tool holder 11 and distinct from the first motor means 4.

The movement is transmitted from the electric motor 18 to the tool holder 11, and more specifically, to the slide 14, through motion transmission means 12, which are described in more detail below.

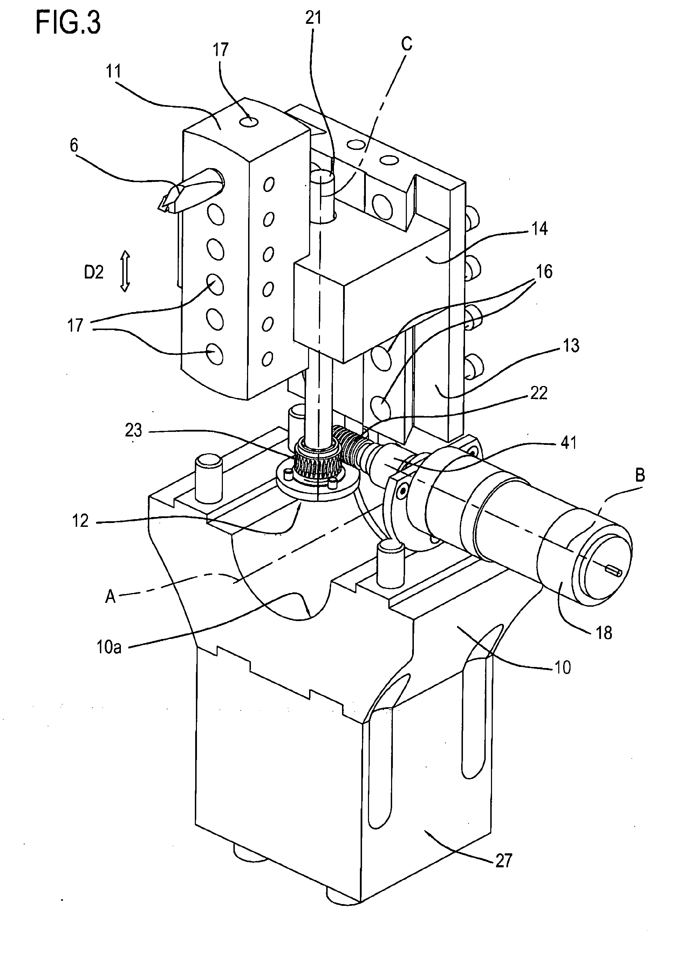

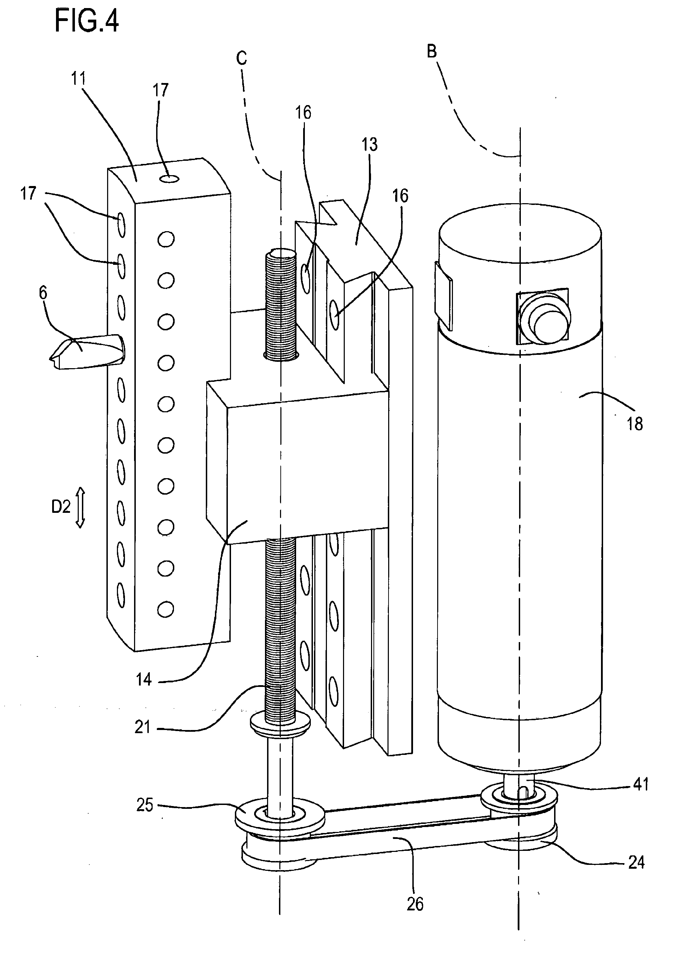

As shown in Figures 3 and 4, the electric motor 18 is mounted solidly to the head 5 and is also driven in rotation as one therewith during machining of the workpiece 2.

The machine 1 also comprises an electric collector 19 which is fitted to the rotating shaft 3 and supplies the electric motor 18.

The collector 19, of known type, allows transmitting an electric and/or power signal to the electric motor 18 during rotation of the shaft 3 about its central axis A.

The machine 1 also comprises an adjustment and control unit 20 which is configured to adjust and control the movement of the tool holder 11 along the orthogonal direction D2 (Figure 1).

The adjustment and control unit 20 is logically connected to the electric motor 18. More precisely, the unit 20 is connected directly to the electric collector 19.

The unit 20 is also connected to the first motor means 4 in such a way as to adjust and control the movement and rotation of the head 5 during operation.

Looking in more detail, the motion transmission means 12 comprise a drive screw 21 coupled to the slide 14 by a connection of lead screw and nut type.

The electric motor 18 comprises an output shaft 41 and, in a first variant embodiment illustrated in Figure 3, the motion transmission means 12 also comprise an endless screw 22 connected coaxially to the output shaft 41 of the electric motor 18 and a gear wheel 23, integral with the drive screw 21 and coupled to the screw 22 in order to transmit motion.

As shown in Figure 3, the output shaft 41 of the electric motor 18 rotates about an axis of rotation, labelled B, while the drive screw 21 rotates about another axis, labelled C. The axes B and C are, in this first variant embodiment, orthogonal to each other. Further, both the axis B and the axis C are also orthogonal to the axis of rotation A and hence to the direction D1.

In a second variant embodiment, illustrated in Figure 4, the motion transmission means 12 comprise a first pulley 24 fitted to the output shaft 41 of the electric motor 18 and a second pulley 25 connected to the drive screw 21. The pulleys 24 and 25 are kinematically coupled by a belt 26. In this solution, as shown in the drawing, the axis B is parallel to the axis C, and both the axis B and the axis C are perpendicular to the axis of rotation A.

For both the variant embodiments of the motion transmission means 12 just described, a defined angle of rotation of the axis of rotation B of the electric motor 18 corresponds to a defined extent of the stroke of the tool holder 11.

Thus, by driving the electric motor 18 through the agency of the adjustment and control unit 20, it is possible to automatically adjust (and control) the position of the tool holder 11 and of the tool 6 between one machining operation and the next without having to reposition it by hand.

Further, adjusting the stroke of the tool holder 11 through an electric motor 18 advantageously makes it possible to work with smaller stroke tolerances and thus to vary the position of the tool 6 more precisely.

In the embodiments described up to here, the tool holder 11 and the electric motor 18 are located on the same side of the shaft 3 with respect to the axis of rotation A.

More specifically, the guide 13, the slide 14 and the motion transmission means 12 also extend on the same side of the shaft 3. This type of assembly may, in use, produce inertias which may subject the head 5 and the shaft 3 to stresses causing imprecise machining of the workpiece 2.

Thus, in order to balance and counteract these inertias, the machine 1 comprises counterbalancing means 27 which can be associated with the tool holder head 5.

As shown in Figure 1, the counterbalancing means 27 also extend on one side of the shaft 3. More specifically, the counterbalancing means 27 are located, relative to the shaft 3, in a position which is diametrically opposite to the tool holder 11.

The inertia generated by the rotation of the head 5 is the greater not only the greater the total weight of the head 5 itself but also the greater the distance from the axis of rotation A the tool holder head 11 is carried to during its motion.

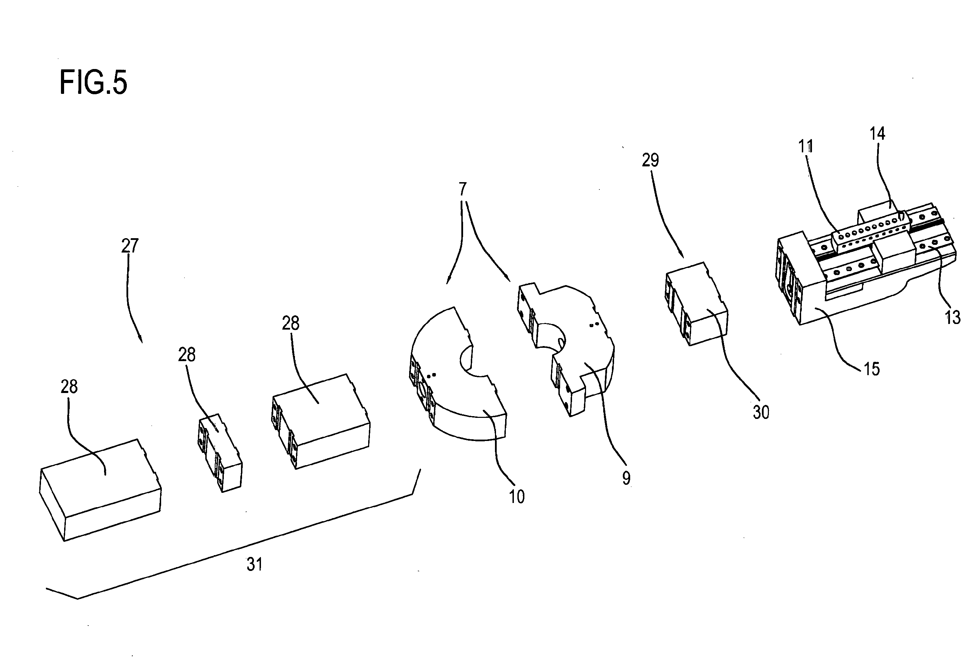

As shown in Figure 5, the counterbalancing means 27 comprise a plurality of modular counterbalancing elements 28.

In the preferred embodiment illustrated in the accompanying drawings, the modular elements 28 are connectable to the supporting member 7 of the head 5. The elements 28 may be connected to the supporting member 7 for example by screws, not illustrated in the drawing.

The use of the modular elements 28 allows precisely calibrating the inertia generated by the counterbalancing means 27 with variations, in particular, of the inertia generated by the tool holder 11 according to the working position it occupies during each machining operation. Thus, the inertia generated by the counterbalancing means 27 can be suitably varied to counterbalance and cancel out the inertia generated by the tool holder 11 according to the working position it adopts in use.

In an alternative variant embodiment, not illustrated, the electric motor 18 is mounted at a position diametrically opposite to the tool holder 11 relative to the axis of rotation A of the shaft 3. In this case, the electric motor 18 itself constitutes at least partly the counterbalancing means 27. In this variant embodiment, too, the aforementioned modular counterbalancing elements 28 can be used and are preferably connectable directly to the electric motor 18.

In a further embodiment, not illustrated, the counterbalancing means 27, too, comprise a guide and a block slidingly coupled to the guide. The movement of the block is accomplished preferably through the agency of motion transmission means similar to the transmission means 12 described above. In this variant embodiment, the counterbalancing means 27 also comprise a second electric motor for moving the block. As in the previous embodiment, the greater the distance the block is moved from the axis of rotation A, the greater the inertia generated by the counterbalancing means 27. It is therefore possible to adjust the stroke of the block in order to vary the inertia it generates in proportion to the inertia generated by the tool holder 11.

To adjust the block in this way, the aforementioned second electric motor, not illustrated, is also preferably connected to the adjustment and control unit 20 which adjusts the position of the block according to the working position adopted by the tool holder 11.

It is also important to consider that the guide 13 allows the tool holder 11 to occupy a limited number of positions. More specifically, for a defined size of the guide 13, there is a maximum distance the tool holder 11 can be moved away from the axis of rotation A.

Thus, to be able to reach greater distances, it is imaginable to increase the length of the guide 13.

Increasing the length of the guide 13, however, increases setup times and costs of the machine 1 because it is necessary to substitute practically the entire head 5 and to recalibrate anew the position of the head 5, of the tool 6 and of the tool holder 11.

To overcome this drawback, the portable machine tool 1 according to the invention preferably comprises a KIT 29 for spacing the tool holder 11 from the axis of rotation A.

As shown in Figure 5, the KIT 29 comprises at least one modular element 30. Preferably, the KIT 29 for spacing the tool holder 11 comprises a plurality of modular elements 30.

The modular elements 30 are distinguished from the modular counterbalancing elements 28 described above.

In the embodiment illustrated in Figure 5, the modular elements 30 can be inserted between the guide 13 and the supporting member 7. The elements may be connected to each other for example by screws, not illustrated in the drawing.

As stated above, the modular radial spacing elements 30 allow further increasing the distance the tool holder 11 can be moved from the axis of rotation A without having to entirely substitute the aforementioned elements.

The use of the spacing KIT 29 also involves increasing the inertias which can be generated by the tool holder 11 according to the new working positions it can adopt.

For this reason, it is preferable to associate the spacing KIT 29 with a counterbalancing KIT 31. The counterbalancing KIT 31 comprises a plurality of modular counterbalancing elements 28.

To correctly balance the inertia generated by the use of one or more radial spacing elements 30, it is preferable to associate with each of the modular elements 30 one or more respective modular counterbalancing elements 28.

As shown in Figure 1, the machine tool 1 further comprises clamping means 43 for aligning the axis of rotation A of the head 5 with an axis of machining.

The term "axis of machining" is used to mean the reference axis relative to which the workpiece 2 must be machined and which coincides with the axis of the machined workpiece when finished.

More in detail, the clamping means 43 comprise an outer clamping unit 32 for securely fixing the machine 1 to an outside surface 2a of the workpiece 2 so that the machine 1 is firmly supported by the workpiece 2 itself.

The outer clamping unit 32 comprises a plurality of gripper elements 33, preferably at least three, which are slidable along respective orthogonal guides 34 extending orthogonally to the axis of rotation A in such a way as to move into contact with the outside surface 2a of the workpiece 2.

The outer clamping unit 32 comprises fixing means, labelled 42 in the drawing 1, for securely fixing each gripper element 33 to the respective guide 34, thereby aligning the axis A of the machine 1 with the axis of machining the workpiece 2.

Moreover, it is preferable to fix the elements 33 to the outside surface 2a of the workpiece 2 by temporary weld points so as to further increase the stability of the machine 1 while the workpiece 2 is being machined.

If the workpiece 2 is hollow, for example like the pipe illustrated, the centring means 43 also comprise an inner clamping unit 35 operating on an inside surface 2b of the workpiece 2.

The inner clamping unit 35 comprises a flange 37 mounted on the shaft 3 of the machine 1 and allowing the shaft 3 to turn freely. Extending from the flange 37 there is a plurality contact rods 38, preferably at least three, which come firmly into contact with the inside surface 2b of the workpiece 2.

The contact rods 38 are adjustable in length and preferably have a telescopic structure. The contact rods 38 are adjustable in length independently of each other so that they can adapt to the inside surface 2b of the workpiece 2, whatever its shape, and align the axis of rotation A with the axis of machining more precisely.

The portable machine tool 1 described herein offers numerous advantages.

A portable machine tool of the type described above makes it possible to reduce the number of steps and the time necessary to set the machine up for working because the position of the tool holder 11 is adjusted automatically.

Furthermore, less time is taken to position the tool holder 11 between one machining operation and the next, thanks to the use of the adjustment and control unit 20 which is connected to the electric motor 18 of the head 5 and which allows automatically controlling and adjusting the movement of the tool holder 11.

The machine 1 has a tool holder head 5 which is simple and compact as a whole, thus allowing the position of the tool holder to be adjusted precisely. Also, mounting the electric motor 18 directly on the head 5 reduces the length of the kinematic chain between the source of the motion (the electric motor 18) and the part to be moved (the tool holder 11), limiting slack, stresses and misalignments which might cause the tool holder 11 to be positioned imprecisely during machining of the workpiece 2.

Moreover, stress and misalignment are limited by the presence of the counterbalancing means 27 which cancel out the inertia generated by the head 5 during its rotation and which thus increase stability while the tool holder 11 is being positioned.

The invention described above is susceptible of industrial application.

It may be modified and adapted in several ways without thereby departing from the scope of the claims. Moreover, all the details of the invention may be substituted for technically equivalent elements.

## Claims

1. A portable machine tool for machining workpieces (2), comprising a shaft (3) that rotates around its central axis (A), a tool holder head (5) carried by the shaft (3) and rotating as one with it around the axis (A), first motor means (4) for rotating the head (5) and for moving it forward along a first direction (D1) which coincides with the axis (A), means (43) for clamping the machine (1) for aligning the axis (A) of rotation of the head (5) with an axis of machining, the head (5) comprising a tool holder (11) which is movable along a second direction (D2) that is orthogonal to the direction (D1), the machine being **characterized in that** it comprises an electric motor (18) for moving the tool holder (11) along the orthogonal direction (D2), the motor (18) being mounted on the head (5) and being separate from the first motor means (4).

2. A machine according to claim 1, **characterized in that** the head (5) comprises a guide (13), which extends along the direction (D2), a slide (14) which is slidingly coupled to the guide (13) and which mounts the tool holder (11), and means (12) for transmitting motion from the electric motor (18) to the slide (14).

3. A machine according to any one of the preceding claims, **characterized in that** it comprises counterbalancing means (27) which can be associated with the tool holder head (5).

4. A machine according to claim 3, **characterized in that** the counterbalancing means (27) are located, relative to the rotating shaft (3), in a position which is diametrically opposite to the tool holder (11).

5. A machine according to either claim 3 or 4, **characterized in that** the counterbalancing means (27) are at least partly defined by the electric motor (18).

6. A machine according to any one of the claims from 3 to 5, **characterized in that** the counterbalancing means (27) comprise a plurality of modular counterbalancing elements (28).

7. A machine according to any one of the preceding claims, **characterized in that** it comprises an adjustment and control unit (20) which is configured to adjust and control the movement of the tool holder (11) along the orthogonal direction (D2).

8. A machine according to any one of the preceding claims, **characterized in that** it comprises an electric collector (19) which is fitted to the rotating shaft (3) and supplies the electric motor (18).

9. A machine according to any one of the preceding claims, **characterized in that** it comprises a counterbalancing KIT (31), the counterbalancing KIT (31) comprising a plurality of modular counterbalancing elements (28).

10. A machine according to any one of the preceding claims, **characterized in that** it comprises a KIT (29) for spacing the tool holder (11) from the axis (A) of rotation, the spacing KIT (29) comprising at least one spacing element (30).

## Patentansprüche

1. Tragbare Werkzeugmaschine zur Bearbeitung von Werkstücken (2), umfassend eine Welle (3), die sich um ihre mittlere Achse (A) dreht, einen Werkzeughalterkopf (5), der von der Welle (3) getragen wird und sich fest verbunden mit dieser um die Achse (A) dreht, erste Antriebsmittel (4), um den Kopf (5) zu drehen und diesen entlang einer ersten Richtung (D1), die mit der Achse (A) übereinstimmt, nach vorn zu bewegen, Mittel (43) zum Einspannen der Maschine (1) zum Ausrichten der Rotationsachse (A) des Kopfs (5) mit einer Bearbeitungsachse, wobei der Kopf (5) einen Werkzeughalter (11) umfasst, der entlang einer zweiten Richtung (D2) bewegbar ist, die rechtwinklig zur Richtung (D1) verläuft, wobei die Maschine **dadurch gekennzeichnet ist, dass** sie einen Elektromotor (18) zum Bewegen des Werkzeughalters (11) entlang der rechtwinkligen Richtung (D2) umfasst, wobei der Motor (18) am Kopf (5) montiert und von den ersten Antriebsmittel (4) getrennt ist.

2. Maschine nach Anspruch 1, **dadurch gekennzeichnet, dass** der Kopf (5) eine Führung (13) umfasst, die sich entlang der Richtung (D2) erstreckt, eine Laufschiene (14), die verschiebbar mit der Führung (13) verbunden ist und auf der der Werkzeughalter (11) montiert ist, sowie Mittel (12) zur Bewegungsübertragung vom Elektromotor (18) auf die Laufschiene (14).

3. Maschine nach einem der vorhergehenden Ansprüche, **dadurch gekennzeichnet, dass** sie Ausgleichsmittel (27) umfasst, die mit dem Werkzeughalterkopf (5) verbunden werden können.

4. Maschine nach Anspruch 3, **dadurch gekennzeichnet, dass** die Ausgleichsmittel (27) relativ zur Rotationswelle (3) in einer Position angeordnet sind, die diametral entgegengesetzt zum Werkzeughalter (11) ist.

5. Maschine nach Anspruch 3 oder 4, **dadurch gekennzeichnet, dass** die Ausgleichsmittel (27) mindestens teilweise durch den Elektromotor (18) definiert sind.

6. Maschine nach einem der Ansprüche 3 bis 5, **dadurch gekennzeichnet, dass** die Ausgleichsmittel (27) eine Vielzahl an modularen Ausgleichselementen (28) umfassen.

7. Maschine nach einem der vorhergehenden Ansprüche, **dadurch gekennzeichnet, dass** sie eine Einstell- und Steuereinheit (20) umfasst, die ausgelegt ist, um die Bewegung des Werkzeughalters (11) entlang der rechtwinkligen Richtung (D2) einzustellen und zu steuern.

8. Maschine nach einem der vorhergehenden Ansprüche, **dadurch gekennzeichnet, dass** sie einen elektrischen Verteiler (19) umfasst, der an der Rotationswelle (3) befestigt ist und den Elektromotor (18) versorgt.

9. Maschine nach einem der vorhergehenden Ansprüche, **dadurch gekennzeichnet, dass** sie einen Ausgleichssatz (31) umfasst, wobei der Ausgleichssatz (31) eine Vielzahl an modularen Ausgleichselementen (28) umfasst.

10. Maschine nach einem der vorhergehenden Ansprüche, **dadurch gekennzeichnet, dass** sie einen Satz (29) umfasst, um einen Abstand des Werkzeughalters (11) von der Rotationsachse (A) herzustellen, wobei der Abstandssatz (29) mindestens ein Abstandselement (30) umfasst.

## Revendications

1. Machine-outil portable destinée à l'usinage de pièces de fabrication (2), comprenant un arbre (3) tournant autour de son axe central (A), une tête porte-outil (5) soutenue par l'arbre (3) et tournant solidairement avec ce dernier autour de l'axe (A), un premier moyen moteur (4) servant à faire tourner la tête (5) et à la déplacer vers l'avant le long d'une première direction (D1) qui coïncide avec l'axe (A), des moyens (43) servant à serrer la machine (1) pour aligner l'axe (A) de rotation de la tête (5) avec un axe d'usinage, la tête (5) comprenant un porte-outil (11) pouvant se déplacer le long d'une seconde direction (D2) étant orthogonale à la direction (D1), la machine étant **caractérisée en ce qu'**elle comprend un moteur électrique (18) servant à déplacer le porte-outil (11) le long d'une direction orthogonale (D2), le moteur (18) étant monté sur la tête (5) et étant séparé du premier moyen moteur (4).

2. Machine selon la revendication 1, **caractérisée en ce que** la tête (5) comprend un guide (13), qui se développe le long de la direction (D2), une glissière (14) étant accouplée de façon coulissante au guide (13) sur laquelle est monté le porte-outil (11), et des moyens (12) servant à transmettre le mouvement du moteur électrique (18) à la glissière (14).

3. Machine selon l'une quelconque des revendications précédentes, **caractérisée en ce qu'**elle comprend des moyens d'équilibrage (27) pouvant être associés à la tête porte-outil (5).

4. Machine selon la revendication 3, **caractérisée en ce que** les moyens d'équilibrage (27) sont situés, par rapport à l'arbre tournant (3), dans une position étant diamétralement opposée au porte-outil (11).

5. Machine selon les revendications 3 ou 4, **caractérisée en ce que** les moyens d'équilibrage (27) sont au moins en partie définis par le moteur électrique (18).

6. Machine selon l'une quelconque des revendications de 3 à 5, **caractérisée en ce que** les moyens d'équilibrage (27) comprennent une pluralité d'éléments d'équilibrage modulaires (28).

7. Machine selon l'une quelconque des revendications précédentes, **caractérisée en ce qu'**elle comprend une unité de réglage et de commande (20) étant configurée pour régler et commander le mouvement du porte-outil (11) le long de la direction orthogonale (D2).

8. Machine selon l'une quelconque des revendications précédentes, **caractérisée en ce qu'**elle comprend un collecteur électrique (19) étant monté à l'arbre tournant (3) et qui alimente le moteur électrique (18).

9. Machine selon l'une quelconque des revendications précédentes, **caractérisée en ce qu'**elle comprend un kit d'équilibrage (31), le kit d'équilibrage (31) comprenant une pluralité d'éléments d'équilibrage modulaires (28).

10. Machine selon l'une quelconque des revendications précédentes, **caractérisée en ce qu'**elle comprend un kit (29) servant à écarter le porte-outil (11) de l'axe (A) de rotation, le kit d'écartement (29) comprenant au moins un élément d'écartement (30).
